Europäisches Patentamt

European Patent Office

Office européen des brevets

(11) Veröffentlichungsnummer: **0 590 399 A2**

(12) **EUROPÄISCHE PATENTANMELDUNG**

(21) Anmeldenummer: **93114675.7**

(22) Anmeldetag: **13.09.93**

(51) Int. Cl.5: **C08G 18/67**, C08G 18/73, C08G 18/75

(30) Priorität: **24.09.92 DE 4232013**

(43) Veröffentlichungstag der Anmeldung:
**06.04.94 Patentblatt 94/14**

(84) Benannte Vertragsstaaten:
**AT BE CH DE DK ES FR GB IT LI NL PT SE**

(71) Anmelder: **BAYER AG**

**D-51368 Leverkusen(DE)**

(72) Erfinder: **Meixner, Jürgen, Dr.**
**Josef-Brocker-Dyk 56**
**D-47803 Krefeld(DE)**
Erfinder: **Fischer, Wolfgang, Dr.**
**Eschendonk 6**
**D-40688 Meerbusch(DE)**

(54) **Acryloylgruppen aufweisende Polyurethane, ein Verfahren zu ihrer Herstellung und ihre Verwendung als Bindemittel für Überzugsmassen.**

(57) Acryloylgruppen aufweisende Polyurethane einer Viskosität bei 23°C von 800 bis 100 000 mPa.s, die unter Einhaltung eines NCO/OH-Äquivalentverhältnisses von 0,7:1 bis 1:1 hergestellte Umsetzungsprodukte von ausgewählten aliphatischen Diisocyanaten mit ausgewählten ein- und mehrwertigen Alkoholen darstellen, ein Verfahren zur Herstellung der Polyurethane aus den genannten Ausgangsmaterialien und ihre Verwendung als Bindemittel für Beschichtungsmittel.

EP 0 590 399 A2

Die vorliegende Erfindung betrifft niederviskose, Acryloylgruppen enthaltende Polyurethane, die durch Strahlenhärtung in vernetzte Produkte überführt werden können, ein Verfahren zu ihrer Herstellung und ihre Verwendung als Bindemittel für Überzugsmassen.

Acryloylgruppen enthaltende Polyurethane, die, wie sie beispielsweise in der DE-OS 16 44 798, DE-OS 21 15 373 oder DE-OS 27 37 406 beschrieben, als Umsetzungsprodukt von u.a. Polyisocyanaten und Hydroxyalkylacrylaten erhalten werden, sind seit langem bekannt. Sie werden mit Hilfe von energiereichen Strahlen wie UV- oder Elektronenstrahlen gehärtet und dienen zum Beschichten von z.B. Holz oder zur Herstellung von Überzügen zu graphischen Zwecken.

Zur Herstellung der Urethanacrylate können die unterschiedlichsten Polyisocyanate eingesetzt werden. Falls die Herstellung von vergilbungsbeständigen Lackfilmen im Mittelpunkt des Interesses steht, werden zur Herstellung der Urethanacrylate (cyclo)aliphatische Polyisocyanate eingesetzt. Obwohl u.a. in der DE-OS 21 15 373 auch Hexamethylendiisocyanat als geeignetes Ausgangsdiisocyanat erwähnt wird, kann gesagt werden, daß es sich hierbei um eine rein hypothetische Offenbarung handelt, weil dieses Diisocyanat in den in dieser Vorveröffentlichung beschriebenen Rezepturen wegen der Kristallinität der entstehenden Urethanacrylate, die einer Verwendung als Lackbindemittel entgegensteht, nicht eingesetzt werden kann.

In DE-OS 4 027 743 werden mit Esteralkoholen modifizierte Urethanacrylate auf Basis Hexamethylendiisocyanat beschrieben, die nach Herstellung bei Raumtemperatur flüssig sind. Bei Temperaturen kleiner 10°C trüben diese hoch- bis mittelviskosen Produkte jedoch ein.

Die der Erfindung zugrundeliegende Aufgabe bestand darin, einen Weg zu Acryloylgruppen enthaltenden, aliphatischen, niederviskosen Polyurethanen aufzuzeigen, bei deren Herstellung Hexamethylendiisocyanat (HDI) als wesentliches Ausgangsdiisocyanat zum Einsatz gelangt, und die dennoch auch bei Temperaturen von kleiner 10°C flüssig sind, ohne daß Lösemittel mitverwendet werden müssen.

Diese Aufgabe konnte durch die Bereitstellung der nachstehend näher beschriebenen erfindungsgemäßen, Acryloylgruppen enthaltenden, aliphatischen Polyurethane bzw. des Verfahrens zu ihrer Herstellung gelöst werden.

Gegenstand der Erfindung sind Acryloylgruppen aufweisende Polyurethane einer Viskosität bei 23°C von 800 bis 100 000 mPa.s, die unter Einhaltung eines NCO/OH-Äquivalentverhältnisses von 0,7:1 bis 1:1 hergestellte Umsetzungsprodukte von organischen Diisocyanaten mit ein- und mehrwertigen Alkoholen darstellen, dadurch gekennzeichnet, daß

als organische Diisocyanate

a) insgesamt 20 bis 50 Mol-% mindestens eines organischen Diisocyanats eines unter 300 liegenden Molekulargewichts mit aliphatisch und/oder cycloaliphatisch gebundenen Isocyanatgruppen mit Ausnahme von Hexamethylendiisocyanat und

b) 50 bis 80 Mol-% Hexamethylendiisocyanat

und als Alkohole

c) insgesamt 43 bis 93 Hydroxyläquivalent-% einer Acryloylgruppen aufweisenden Alkoholkomponente einer mittleren Hydroxylfunktionalität von 0,8 bis 1,5, bestehend aus mindestens einem Acryloylgruppen aufweisenden Alkohol des Molekulargewichtsbereichs 116 bis 1000,

d) insgesamt 7 bis 50 Hydroxyläquivalent-% mindestens eines 1- oder 2-wertigen Alkohols des Molekulargewichtsbereichs 130 bis 300 mit verzweigter Molekülstruktur und

e) insgesamt 0 bis 50 Hydroxyläquivalent-% mindestens eines ein- oder mehrwertigen Alkohols eines unter 130 liegenden Molekulargewichts

zum Einsatz gelangen, mit der Maßgabe, daß die Komponente c) zumindest zu 50 Mol-% aus Veresterungsprodukten eines mittleren Molekulargewichts von 300 bis 1000 und einer mittleren Hydroxylfunktionalität von 0,8 bis 1,5 aus (i) Acrylsäure und (ii) Ethergruppen aufweisenden, mindestens 3-wertigen Alkoholen besteht.

Gegenstand der Erfindung ist auch ein Verfahren zur Herstellung dieser Acryloylgruppen aufweisenden Polyurethane, welches dadurch gekennzeichnet ist, daß man die vorstehend genannten Ausgangsmaterialien a) bis e) unter Einhaltung eines NCO/OH-Äquivalentverhältnisses von 0,7:1 bis 1:1 in beliebiger Reihenfolge miteinander umsetzt.

Gegenstand der Erfindung ist auch die Verwendung der erfindungsgemäßen Acryloylgruppen aufweisenden Polyurethane als Bindemittel für Überzugsmassen, insbesondere als Bindemittel für durch energiereiche Strahlung härtbare Lacke.

Die beim erfindungsgemäßen Verfahren als Gemisch oder auch getrennt zum Einsatz gelangenden Diisocyanate bestehen zu 20 bis 50, vorzugsweise 30 bis 50 Mol-% aus Diisocyanaten a) und zu 50 bis 80, vorzugsweise 50 bis 70 Mol-%, jeweils bezogen auf die Gesamtmenge der zum Einsatz gelangenden Diisocyanate, aus Hexamethylendiisocyanat.

2

Bei den Diisocyanaten a) handelt es sich um solche eines unter 300 liegenden Molekulargewichts mit aliphatisch und/oder cycloaliphatisch gebundenen Isocyanatgruppen, wobei Hexamethylendiisocyanat ausgenommen ist. In Betracht kommen beispielsweise 1-Isocyanato-3,3,5-trimethyl-5-isocyanatomethyl-cyclohexan (IPDI), 1,6-Diisocyanato-2,2,4-trimethylhexan, 1,4-Diisocyanatocyclohexan, 1-Methyl-1-isocyanato-3-(4)-isocyanatomethylcyclohexan oder Gemische derartiger Diisocyanate.

Die beim erfindungsgemäßen Verfahren zum Einsatz gelangenden Alkohole setzen sich zu 43 bis 93, vorzugsweise 70 bis 90 Hydroxyläquivalent-% aus Alkoholen der Gruppe c), zu 7 bis 50, vorzugsweise 10 bis 30 Hydroxyläquivalent-% an Alkoholen der Gruppe d) und zu 0 bis 50, vorzugsweise 0 bis 35 Hydroxyläquivalent-% aus Alkoholen der Gruppe e) zusammen, wobei die Gesamtmenge der zum Einsatz gelangenden Diisocyanate a) und b) einerseits und die Gesamtmenge der Alkohole c) bis e) andererseits dem obengenannten NCO/OH-Äquivalentverhältnis entspricht.

Die Alkoholkomponente c) weist eine mittlere Hydroxylfunktionalität von 0,8 bis 1,5 auf und besteht aus mindestens einem Acryloylgruppen aufweisenden Alkohol des Molekulargewichtsbereichs 116 bis 1000, mit der Maßgabe, daß mindestens 50 Mol-% der Alkoholkomponente c) aus Ethergruppen aufweisenden Veresterungsprodukten des Molekulargewichtsbereichs 300 bis 1000 und einer mittleren Hydroxylfunktionalität von 0,8 bis 1,5 aus (i) Acrylsäure und (ii) Ethergruppen aufweisenden, mindestens 3-wertigen Alkoholen bestehen.

Die nicht der zuletzt gemachten Definition entsprechenden, gegebenenfalls in einer Menge von bis zu 50 Mol-%, bezogen auf die Gesamtmenge der Komponente c) vorliegenden Acryloylgruppen aufweisenden Alkohole weisen vorzugsweise ein Molekulargewicht von 116 bis 144 und eine Hydroxylgruppe pro Molekül auf. Beispiele hierfür sind Hydroxyethylacrylat, das Anlagerungsprodukt von 1 Mol Propylenoxid an 1 Mol Acrylsäure (Gemisch aus 1-Methyl-2-hydroxyethylacrylat und 2-Hydroxypropylacrylat), 3-Hydroxypropylacrylat, 2-, 3- und 4-Hydroxypropylacrylat oder Gemische derartiger Hydroxyalkylacrylate. Bei den in einer Menge von mindestens 50 Mol-%, bezogen auf die Gesamtmenge der Komponente c), vorliegenden Acryloyl- und Ethergruppen aufweisenden Veresterungsprodukten handelt es sich beispielsweise um Veresterungsprodukte der Acrylsäure mit Alkoxylierungsprodukten mehrwertiger Alkohole, die pro Molekül mindestens eine Etherbrücke aufweisen. Bei den Alkoxylierungsprodukten handelt es sich um die Anlagerungsprodukte von Propylenoxid und/oder Ethylenoxid, vorzugsweise Ethylenoxid an mindestens 3-wertige Alkohole wie insbesondere Trimethylolpropan, Glycerin und/oder Pentaerythrit. Besonders bevorzugt werden die Ethoxylierungsprodukte von Trimethylolpropan oder von Glycerin, insbesondere die Anlagerungsprodukte von 4 bis 12 Mol Ethylenoxid an 1 Mol Trimethylolpropan. Bei der Herstellung der Veresterungsprodukte mit Acrylsäure kommen die Ausgangskomponenten in einem Äquivalentverhältnis von Carboxylgruppen zu Hydroxylgruppen von 1,5:3 bis 2,2:3, vorzugsweise 2:3 zum Einsatz.

Bei der Komponente d) handelt es sich um mindestens einen gegebenenfalls Ether- und/oder Estergruppen aufweisenden ein- oder zweiwertigen Alkohol des Molekulargewichtsbereichs 130 bis 300, vorzugsweise 130 bis 200 mit verzweigter Struktur. Beispiele hierfür sind 2,2-Diethyl-1,3-propandiol, 2-Ethyl-1,3-hexandiol, 2,5-Dimethyl-2,5-hexandiol, 2,2,4-Trimethyl-1,3-pentandiol sowie das Umsetzungsprodukt aus 1 Mol Trimethylolpropan und 1 Mol Formaldehyd (Trimethylolpropanformal).

Als Aufbaukomponente e) eignen sich vorzugsweise einbis zweiwertige Alkohole mit 2 bis 8 Kohlenstoffatomen mit einem Molekulargewicht von unter 130, wie beispielsweise Ethanol, Benzylalkohol, Ethylenglykol, Propandiol-1,2, Propandiol-1,3, Diethylenglykol, Butandiol-1,3, Butandiol-1,4 oder Hexandiol-1,6.

Die Herstellung der Polyurethane durch Umsetzung der genannten Ausgangskomponenten kann in Substanz oder in gegenüber Isocyanaten inerten Lösungsmitteln, wie beispielsweise Aceton, Ethylacetat, Butylacetat, niedermolekularen Estern der (Meth)Acrylsäuren oder Gemischen derartiger Lösungsmittel erfolgen, wobei vorzugsweise in allen Reaktionsstufen Reaktionstemperaturen von 20 bis 100°C, insbesondere 40 bis 80°C eingehalten werden.

Wie bereits oben angedeutet können die Ausgangskomponenten a) bis e) und auch die einzelnen Bestandteile der Komponenten a), c), d) und/oder e) bei der Durchführung des erfindungsgemäßen Verfahrens in beliebiger Reihenfolge miteinander zur Reaktion gebracht werden. So ist es beispielsweise möglich, ein Gemisch der Komponenten a) und b) vorzulegen und die Komponenten c) bis e) einzeln oder als Mischung zuzugeben, oder die Komponenten c) bis e) vorzulegen und die Komponenten a) und b) einzeln oder als Mischung zuzugeben.

Besonders bevorzugt ist jedoch eine Verfahrenweise, die darin besteht, daß man die Komponente a) in einem geeigneten Reaktionsgefäß vorlegt, dann mit soviel der Komponente c) umsetzt, daß ein NCO/OH-Äquivalentverhältnis von 1:0,4 bis 1:0,6, vorzugsweise 1:0,5 resultiert, nach weitgehender Beendigung der hierbei spontan einsetzenden Additionsreaktion die Komponente b) hinzufügt und schließlich nacheinander oder als Mischung den gegebenenfalls noch vorliegenden Rest der Komponente c) und die Komponenten d) und gegebenenfalls e) hinzufügt und abreagieren läßt. Falls die Komponente c) aus mehreren unterschiedlichen Alkoholen besteht, kann bei dieser Arbeitsweise der genannte erste Teil aus einem Teil der als Gemisch eingesetzten Komponente c) oder aber auch z.B. aus einem Alkohol der in c) vorliegenden Art und der zweite Teil aus dem zweiten Teil des Gemischs oder auch aus einem anderen Alkohol der in c) vorliegenden Art bestehen.

Die Umsetzungen erfolgen vorzugsweise in Gegenwart geeigneter Katalysatoren, wie beispielsweise Zinn(II)octoat, Dibutylzinndilaurat oder tertiären Aminen wie Dimethylbenzylamin.

Als Ergebnis der Umsetzung liegen Produkte mit einem unter 0,1 Gew.-% liegenden NCO-Gehalt vor.

Das anfallende Urethanacrylat kann andererseits durch Zugabe geeigneter Inhibitoren und Antioxidantien, wie beispielsweise Phenole und/oder Hydrochinone, in Mengen von jeweils 0,001 bis 0,3 Gew.-%, bezogen auf Urethanacrylat, vor vorzeitiger und unerwünschter Polymerisation geschützt werden. Ein gut geeigneter Inhibitor ist beispielsweise das in den Beispielen eingesetzte Phenothiazin. Der Zusatz dieser Hilfsmittel kann vor, gleichzeitig und/oder im Anschluß an die Durchführung des erfindungsgemäßen Verfahrens erfolgen.

Die unter erfindungsgemäßer Verwendung der erfindungsgemäßen Produkte hergestellte Lacke können die an sich bekannten Hilfs- und Zusatzmittel der Lacktechnologie enthalten.

Hierzu gehören Füllstoffe, Pigmente, Farbstoffe, Thixotropiermittel, Glättmittel, Mattierungsmittel und Verlaufsmittel, die in üblichen Mengen eingesetzt werden können. Die Acryloylgruppen enthaltenden Polyurethane können auch in an sich bekanten Lacklösungsmitteln gelöst, mit copolymerisierbaren Monomeren abgemischt oder in Wasser emulgiert zum Einsatz gelangen, werden jedoch bevorzugt, der erfindungsgemäßen Aufgabe entsprechend, ohne diese Hilfsmittel eingesetzt.

Geeignete Lösungsmittel sind beispielsweise Butylacetat, Cyclohexan, Aceton, Toluol oder Gemische derartiger Lösungsmittel.

Beispiele für geeignete copolymerisierbare Monomere sind organische Verbindungen, die mindestens eine copolymerisierbare olefinische Doppelbindung pro Molekül und bei 23°C eine Viskosität von maximal 500 mPa.s aufweisen. Hierzu gehören beispielsweise Styrol, 1,6-Hexandioldiacrylat, Trimethylolpropantriacrylat oder N-Vinylpyrrolidon.

Die inerten Lösungsmittel und auch die copolymerisierbaren Monomeren können in Mengen von jeweils bis zu 100 Gew.-%, vorzugsweise bis zu 50 Gew.-%, bezogen auf das Gewicht der Acryloylgruppen aufweisenden Polyurethane eingesetzt werden.

Es ist auch möglich, gleichzeitig sowohl inerte Lösungsmittel der beispielhaft genannten Art als auch copolymerisierbare Monomere der beispielhaft genannten Art einzusetzen.

Falls die Acryloylgruppen aufweisenden Polyurethane aus wäßriger Emulsion verarbeitet werden sollen, kann die Herstellung entsprechender wäßriger Emulsionen beispielsweise mit Hilfe externer Emulgatoren und gegebenenfalls üblicher in der Emulsionstechnik angewandter Hilfsmittel erfolgen.

Hierfür geeignete Emulgatoren sind bekannt und z.B. in Ullmanns Encyclopädie der technischen Chemie, Bd. 10, 4. Auflage, Kap. Emulsionen, S. 449 ff. beschrieben.

Bei allen Varianten der erfindungsgemäßen Verwendung erfolgt die Aushärtung, gegebenenfalls nach Verdunsten von flüchtigen Hilfsmitteln wie inerte Lösungsmittel oder Wasser, mittels energiereicher Strahlung, wie UV-Licht, Elektronen- oder Gammastrahlen.

Im Falle der Vernetzung mittels UV-Bestrahlung ist es notwendig, den Überzugsmassen Fotoinitiatoren hinzuzufügen.

Als Fotoinitiatoren sind die üblicherweise eingesetzten Verbindungen geeignet, wie sie z.B. in Houben-Weyl, Methoden der organischen Chemie, Band E 20, Seite 80 ff., Georg Thieme Verlag, Stuttgart 1987, beschrieben sind.

Gut geeignet sind z.B. Benzoinether wie Benzoinisopropylether, Benzilketale, wie z.B. Benzildimethylketal und Hydroxyalkylphenone, wie z.B. 1-Phenyl-2-hydroxy-2-methylpropan-1-on.

Die erwähnten Fotoinitiatoren, die je nach Verwendungszweck der erfindungsgemäßen Produkte in Mengen zwischen 0,1 bis 10 Gew.-%, vorzugsweise 0,1 bis 5 Gew.-%, bezogen auf das Gewicht der erfindungsgemäßen Produkte eingesetzt werden, können als einzelne Substanz oder, wegen häufiger vorteilhafter synergistischer Effekte, auch in Kombination miteinander verwendet werden.

Die unter Verwendung der erfindungsgemäßen Produkte als Bindemittel hergestellten Überzugsmassen bzw. Lacke eignen sich zur Beschichtung der unterschiedlichsten Substrate, wie z.B. Papier, Kartonage, Leder, Holz, Kunststoffe, Vlies, Textilien, keramische Materialien, mineralische Materialien, Glas, Metall, Kunstleder, fotografische Materialien, wie z.B. mit fotografischer Schicht versehenes Papier.

Die nachfolgenden Beispiele dienen der weiteren Erläuterung der Erfindung. Alle Prozentangaben beziehen sich auf das Gewicht.

Beispiele 1 bis 7 (erfindungsgemäße Beispiele)

Die in Tabelle 1 genannte Menge an Komponente a) wird zusammen mit 0,02 % Dibutylzinndilaurat und 0,01 % Phenothiazin unter Durchleiten von Luft auf 50°C erwärmt. Dann wird die in Tabelle 1 genannte Menge an Teil 1 der Komponente c) unter Rühren zugetropft und durch Kühlen eine maximale Reaktionstemperatur von 60°C aufrechterhalten, bis die Bildung des Umsetzungsproduktes aus a) und Teil 1 von c) weitgehend abgeschlossen ist, was sich am Abklingen der Wärmetönung bemerkbar macht. Anschließend wird die in der Tabelle genannte Menge an Komponente b) hinzugefügt und in das Gemisch nacheinander die in der Tabelle genannten Mengen an Rest der Komponente c) sowie die Komponenten d) und e) unter Rühren eingetropft, wobei durch Kühlen eine maximale Reaktionstemperatur von 60°C aufrechterhalten wird. Nach Abklingen der Wärmetönung wird die Reaktion bei 60°C fortgeführt, bis der NCO-Gehalt des Reaktionsgemischs auf unter 0,1 % abgesunken ist.

Beispiele 8 und 9 (Vergleichsbeispiele)

Die ebenfalls in der nachstehenden Tabelle zusammengefaßten Vergleichsbeispiele 8 und 9 wurden in Analogie zu den erfindungsgemäßen Beispielen 1 bis 7 durchgeführt. Dabei zeigt sich, daß der Verzicht auf die Komponente a) bzw. d) zu kristallinen Endprodukten führt.

| | Beispiele | | | | | | | Vergleichsbeispiele | |
|---|---|---|---|---|---|---|---|---|---|
| Einwaage (Mol) | 1 | 2 | 3 | 4 | 5 | 6 | 7 | 8 | 9 |
| **Komponente a)** | | | | | | | | | |
| Isophorondiisocyanat | 0,3 | 0,3 | 0,5 | 0,3 | 0,3 | 0,3 | 0,3 | - | 0,3 |
| **Komponente c), Teil 1** | | | | | | | | | |
| Hydroxyethylacrylat | 0,3 | - | - | - | 0,3 | - | 0,3 | - | 0,3 |
| 4-fach ethoxyliertes Trimethylolpropandiacrylat | - | - | - | - | - | 0,3 | - | - | - |
| 12-fach ethoxyliertes Trimethylolpropandiacrylat | - | 0,3 | 0,5 | 0,3 | - | - | - | - | - |
| **Komponente b)** | | | | | | | | | |
| Hexamethylendiisocyanat | 0,7 | 0,7 | 0,5 | 0,7 | 0,7 | 0,7 | 0,7 | 1,0 | 0,7 |
| **Komponente c), Teil 2** | | | | | | | | | |
| Hydroxyethylacrylat | 0,5 | - | - | - | 0,5 | - | 0,5 | 0,8 | 0,5 |
| 4-fach ethoxyliertes Trimethylolpropandiacrylat | - | - | - | - | 0,8 | 1,5 | - | - | - |
| 12-fach ethoxyliertes Trimethylolpropandiacrylat | 0,8 | 1,5 | 0,5 | 0,7 | - | - | 1,0 | 0,8 | 1,2 |
| **Komponente d)** | | | | | | | | | |
| 2-Ethyl-1,3-hexandiol | 0,2 | - | 0,25 | 0,5 | 0,2 | - | - | 0,2 | - |
| Trimethylolpropanformal | - | 0,2 | - | - | - | 0,2 | - | - | - |
| 2,2,4-Trimethylpentan-1,3-diol | - | - | - | - | - | - | 0,2 | - | - |
| **Komponente e)** | | | | | | | | | |
| Propandiol-1,2 | - | - | 0,25 | - | - | - | - | - | - |
| Viskosität (23°C/mPa.s) | 6000 | 3400 | 32000 | 25000 | 32000 | 50000 | 3500 | krist. | krist. |

Verwendungsbeispiele

Die Produkte der erfindungsgemäßen Beispiele 1 bis 7 werden mit jeweils 5 % 1-Phenyl-2-hydroxy-2-methylpropan-1-on versetzt. Nach Auftragen der Lackfilme auf Karton (15 μm Auftragsstärke) werden diese

unter einem Hanoviastrahler (80 W/cm, 10 cm Abstand) durchbewegt. Bei mindestens 30 m/min Bandgeschwindigkeit entstanden lösemittel- und kratzfeste Überzüge.

"Losemittelfest" bedeutet in diesem Fall, daß der Lackfilm nach mindestens 30 Doppelhüben mit einem in Butylacetat getränkten Tuch, unter 1 kg Belastung, noch einwandfrei aussieht.

**Patentansprüche**

1. Acryloylgruppen aufweisende Polyurethane einer Viskosität bei 23°C von 800 bis 100 000 mPa.s, die unter Einhaltung eines NCO/OH-Äquivalentverhältnisses von 0,7:1 bis 1:1 hergestellte Umsetzungsprodukte von organischen Diisocyanaten mit ein- und mehrwertigen Alkoholen darstellen, dadurch gekennzeichnet, daß
als organische Diisocyanate
a) insgesamt 20 bis 50 Mol-% mindestens eines organischen Diisocyanats eines unter 300 liegenden Molekulargewichts mit aliphatisch und/oder cycloaliphatisch gebundenen Isocyanatgruppen mit Ausnahme von Hexamethylendiisocyanat und
b) 50 bis 80 Mol-% Hexamethylendiisocyanat
und als Alkohole
c) insgesamt 43 bis 93 Hydroxyläquivalent-% einer Acryloylgruppen aufweisenden Alkoholkomponente einer mittleren Hydroxylfunktionalität von 0,8 bis 1,5, bestehend aus mindestens einem Acryloylgruppen aufweisenden Alkohol des Molekulargewichtsbereichs 116 bis 1000,
d) insgesamt 7 bis 50 Hydroxyläquivalent-% mindestens eines 1- oder 2-wertigen Alkohols des Molekulargewichtsbereichs 130 bis 300 mit verzweigter Molekülstruktur und
e) insgesamt 0 bis 50 Hydroxyläquivalent-% mindestens eines ein- oder mehrwertigen Alkohols eines unter 130 liegenden Molekulargewichts
zum Einsatz gelangen, mit der Maßgabe, daß die Komponente c) zumindest zu 50 Mol-% aus Veresterungsprodukten eines mittleren Molekulargewichts von 300 bis 1000 und einer mittleren Hydroxylfunktionalität von 0,8 bis 1,5 aus (i) Acrylsäure und (ii) Ethergruppen aufweisenden, mindestens 3-wertigen Alkoholen besteht.

2. Verfahren zur Herstellung von Acryloylgruppen aufweisenden Polyurethanen gemäß Anspruch 1 durch Umsetzung von organischen Diisocyanaten mit ein- und mehrwertigen Alkoholen unter Einhaltung eines NCO/OH-Äquivalentverhältnisses von 0,7:1 bis 1:1, dadurch gekennzeichnet, daß man als organische Diisocyanate
a) insgesamt 20 bis 50 Mol-% mindestens eines organischen Diisocyanats eines unter 300 liegenden Molekulargewichts mit aliphatisch und/oder cycloaliphatisch gebundenen Isocyanatgruppen mit Ausnahme von Hexamethylendiisocyanat, und
b) 50 bis 80 Mol-% Hexamethylendiisocyanat
und als Alkohole
c) insgesamt 43 bis 93 Hydroxyläquivalent-% einer Acryloylgruppen aufweisenden Alkoholkomponente einer mittleren Hydroxylfunktionalität von 0,8 bis 1,5, bestehend aus mindestens einem Acryloylgruppen aufweisenden Alkohol des Molekulargewichtsbereichs 116 bis 1000,
d) insgesamt 7 bis 50 Hydroxyläquivalent-% mindestens eines 1- oder 2-wertigen Alkohols des Molekulargewichtsbereichs 130 bis 300 mit verzweigter Molekülstruktur und
e) insgesamt 0 bis 50 Hydroxyläquivalent-% mindestens eines ein- oder mehrwertigen Alkohols eines unter 130 liegenden Molekulargewichts
verwendet, wobei die genannten Ausgangsmaterialien in beliebiger Reihenfolge miteinander zur Umsetzung gebracht werden, mit der Maßgabe, daß die Komponente c) zumindest zu 50 Mol-% aus Veresterungsprodukten eines mittleren Molekulargewichts von 300 bis 1000 und einer mittleren Hydroxylfunktionalität von 0,8 bis 1,5 aus (i) Acrylsäure und (ii) Ethergruppen aufweisenden, mindestens 3-wertigen Alkoholen besteht.

3. Verfahren gemäß Anspruch 2, dadurch gekennzeichnet, daß man die Komponente a) in einem Reaktionsgefäß vorlegt, dann zunächst mit zumindest einem Teil der Komponente c) unter Einhaltung eines NCO/OH-Äquivalentverhältnisses von 1:0,4 bis 1:0,6 umsetzt, anschließend die Gesamtmenge der Komponente b) hinzufügt und schließlich nacheinander oder als Mischung den gegebenenfalls noch verbleibenden Rest der Komponente c) und die Komponenten d) und gegebenenfalls e) dem Reaktionsgemisch hinzufügt, um die Isocyanat-Additionsreaktion zum Abschluß zu bringen.

**4.** Verwendung der Acryloylgruppen aufweisenden Polyurethane gemäß Anspruch 1 als Bindemittel für Beschichtungsmittel.